# FASCICULE DE BREVET EUROPEEN

(11) **EP 3 802 183 B1**
(45) Date de publication et mention de la délivrance du brevet: **12.04.2023**
(21) Numéro de dépôt: 19730398.5
(22) Date de dépôt: 07.05.2019
(51) Int. Cl.: B60K 1/04

(54) **LONGERON DE BATTERIE DE TRACTION SOUS PLANCHER DE VEHICULE**
ANTRIEBSBATTERIESCHIENE UNTERHALB DES BODENS EINES FAHRZEUGES
TRACTION BATTERY RAIL BENEATH THE FLOOR OF A VEHICLE

(30) Priorité: 06.06.2018 FR 1854895
(43) Date de publication de la demande: 14.04.2021
(73) Titulaire: PSA Automobiles SA, 78300 Poissy (FR)
(72) Inventeur: BESSETTE, Damien, 25150 ECOT (FR); PLUCHAUD, Eric, 25260 MONTENOIS (FR)
(86) Numéro de dépôt international: PCT/FR2019/051044
(87) Numéro de publication internationale: WO 2019/234319

(56) Documents cités:
- DE-A1-102011 113 912
- DE-A1-102011 120 960
- US-A1- 2015 171 510

## Description

L'invention a trait au domaine des véhicules automobiles, plus particulièrement au comportement en déformation d'un véhicule automobile lors d'un choc latéral.

Actuellement, la production de véhicules électriques ou hybrides est favorisée. Ces véhicules comprennent, sous un plancher, des unités de batterie de traction. Les batteries de traction ont pour principal inconvénient d'alourdir le véhicule, puisqu'elles ajoutent près de 300kg à la masse totale du véhicule. De ce fait, lors d'un choc latéral, cette augmentation de masse augmente les efforts de déformation et la quantité d'énergie à absorber.

Les documents DE102011120960 et DE102011113912 décrivent un véhicule automobile comprenant un plancher, deux profilés latéraux de bas de caisse, de part et d'autre du plancher, une unité de batteries de traction sous le plancher et entre les deux profilés, et un longeron de batterie disposé latéralement entre l'unité de batteries de traction et au moins un des deux profilés latéraux de bas de caisse.

Le document de brevet publié US 2016114667 A1 divulgue une structure inférieure de plancher de véhicule pourvue d'une unité de batteries de traction, positionnée sous le plancher du véhicule, sur un support dédié fixé audit plancher. La structure inférieure de plancher est conçue pour améliorer la transmission des efforts inertiels des batteries au reste du véhicule et à éviter les déformations de l'unité de batterie lors d'un choc latéral. Entre les profilés latéraux de bas de caisse et l'unité de batterie se trouvent des moyens d'absorption d'énergie en cas de choc latéral, qui sont composés de deux profilés. Ces moyens d'absorption s'étendent latéralement sous les profilés de bas de caisse et en constituent ainsi une prolongation vers le bas. En d'autres termes, les moyens d'absorption d'énergie en cas de choc latéral de cet enseignement requièrent que les profilés de bas de caisse s'étendent peu vers le bas au-delà du plancher et prévoient ainsi qu'ils participent peu à l'absorption d'énergie de choc.

L'invention a pour objectif de pallier au moins un des inconvénients de l'état de la technique susmentionné. Plus particulièrement, l'invention a pour objectif d'améliorer le comportement en déformation des véhicules partiellement électriques lors d'un choc latéral.

L'invention a pour objet un véhicule automobile à propulsion au moins partiellement électrique, comprenant : un plancher ; deux profilés latéraux de bas de caisse, de part et d'autre du plancher ; une unité de batteries de traction sous le plancher et entre les deux profilés ; au moins un longeron de batterie disposé latéralement entre l'unité de batteries de traction et au moins un des deux profilés latéraux de bas de caisse, respectivement ; remarquable en ce que l'au moins un longeron de batterie présente une section transversale avec une première portion située du côté de l'unité de batteries de traction et une deuxième portion située du côté du profilé latéral de bas de caisse correspondant, ladite deuxième portion présentant une raideur en compression transversale inférieure à une raideur en compression transversale de la première portion, de manière à ce que la deuxième portion se déforme de manière préférentielle par rapport à la première portion lors d'un choc latéral sur le véhicule du côté dudit longeron.

Selon un mode avantageux de l'invention, la deuxième portion de la section transversale de l'au moins un longeron de batterie présente, par unité de longueur, une surface de matière travaillant en compression transversale, qui est inférieure à 70% d'une surface de matière travaillant en compression transversale de la première portion de ladite section. Plus préférentiellement, la deuxième portion de la section transversale de l'au moins un longeron de batterie présente une surface de matière travaillant en compression transversale qui est inférieure à 50% d'une surface de matière travaillant en compression transversale de la première portion de ladite section.

Selon un mode avantageux de l'invention, les première et deuxième portions de la section transversale de l'au moins un longeron de batterie sont adjacentes le long d'un plan vertical.

Selon un mode avantageux de l'invention, les première et deuxième portions de la section transversale de l'au moins un longeron de batterie sont d'un seul tenant. Préférentiellement, le longeron de batterie est en matériau métallique, plus préférentiellement en aluminium, plus préférentiellement en aluminium extrudé.

Selon un mode avantageux de l'invention, les première et deuxième portions de la section transversale de l'au moins un longeron de batterie comprennent des parois formant des corps creux, les parois de ladite deuxième portion présentant une épaisseur moyenne inférieure à 70% d'une épaisseur moyenne des parois de ladite première portion. Plus préférentiellement, la deuxième portion présente une épaisseur moyenne inférieure à 50% de l'épaisseur moyenne des parois de la première portion.

Avantageusement, l'épaisseur moyenne des parois de la première portion est supérieure à 4.5 mm et/ou inférieure à 5.5mm. Avantageusement, l'épaisseur moyenne des parois de la deuxième portion est supérieure à 1.5 mm et/ou inférieure à 2.5mm.

Selon un mode avantageux de l'invention, chacune des première et deuxième portions de la section transversale de l'au moins un longeron de batterie comprend au moins trois parois horizontales.

Selon un mode avantageux de l'invention, chacun des deux profilés latéraux de bas de caisse présente une section transversale formant un corps creux, l'au moins un longeron de batterie s'étendant verticalement sur au moins 50% de la hauteur dudit longeron le long du corps creux du profilé latéral correspondant.

Avantageusement, chacun des profilés latéraux de bas de caisse comprend deux parties présentant chacune une section transversale en forme de U couché, les branches du U étant prolongées dans leurs extrémités par des ailes formant des feuillures de jonction. Ces ailes et feuillures sont avantageusement verticales. Le ou chacun des profilés latéraux de bas de caisse correspondant à l'au moins un longeron de batterie peut comprendre, en outre, un cloisonnement interne constitué par des parois verticales et horizontales, ce cloisonnement étant apte à améliorer le comportement en déformation du profilé lors d'un choc latéral.

Selon un mode avantageux de l'invention, la deuxième portion de la section transversale de l'au moins un longeron de batterie forme, sur une face latéralement extérieure de ladite portion, un épaulement au niveau ou en-dessous d'une face inférieure du corps creux du profilé latéral correspondant.

Selon un mode avantageux de l'invention, l'épaulement sur la face latéralement extérieure de la deuxième portion de la section transversale de l'au moins un longeron de batterie s'étend horizontalement le long de la face inférieure du corps creux du profilé latéral correspondant.

Selon un mode avantageux de l'invention, l'épaulement sur la face latéralement extérieure de ladite deuxième portion de la section transversale de l'au moins un longeron de batterie est formé par un corps creux inférieur de ladite portion, ledit corps présentant une paroi inférieure inclinée vers le haut et latéralement vers l'extérieur.

Les mesures de l'invention sont intéressantes en ce qu'elles permettent d'améliorer le comportement en déformation d'un véhicule partiellement électrique lors d'un choc latéral. En effet, l'augmentation de poids d'un tel véhicule, causée par la présence d'unités de batteries de traction, peut conduire à une augmentation des valeurs de décélération et, partant, une augmentation des déformations lors d'un choc latéral. Ainsi, la présence d'un longeron de batterie à deux portions, avec une raideur plus importante dans la portion orientée vers la batterie que dans la portion orientée vers l'extérieur, permet d'améliorer le comportement en déformation du véhicule tout en gardant une raideur suffisamment importante pour éviter d'endommager les unités de batteries du véhicule lors d'un choc latéral. Ce longeron de batterie est prévu uniquement sur les véhicules à traction électrique, et n'implique par conséquent pas de modifications pour les véhicules à moteur thermique. La configuration du longeron de batterie selon l'invention n'introduit pas de modifications supplémentaires sur le reste de la structure, évitant ainsi d'engendrer des coûts dans une modification éventuelle et/ou adaptation sur d'autres profils de véhicules.

D'autres caractéristiques et avantages de la présente invention seront mieux compris à l'aide de la description et des dessins parmi lesquels :
- la figure 1 est une vue en coupe d'un véhicule automobile avec un longeron de batterie selon l'invention ;
- la figure 2 montre un grossissement de la figure 1 au niveau du longeron de batterie ;
- la figure 3 est une vue en coupe du véhicule montré à la figure 1 après un choc latéral.

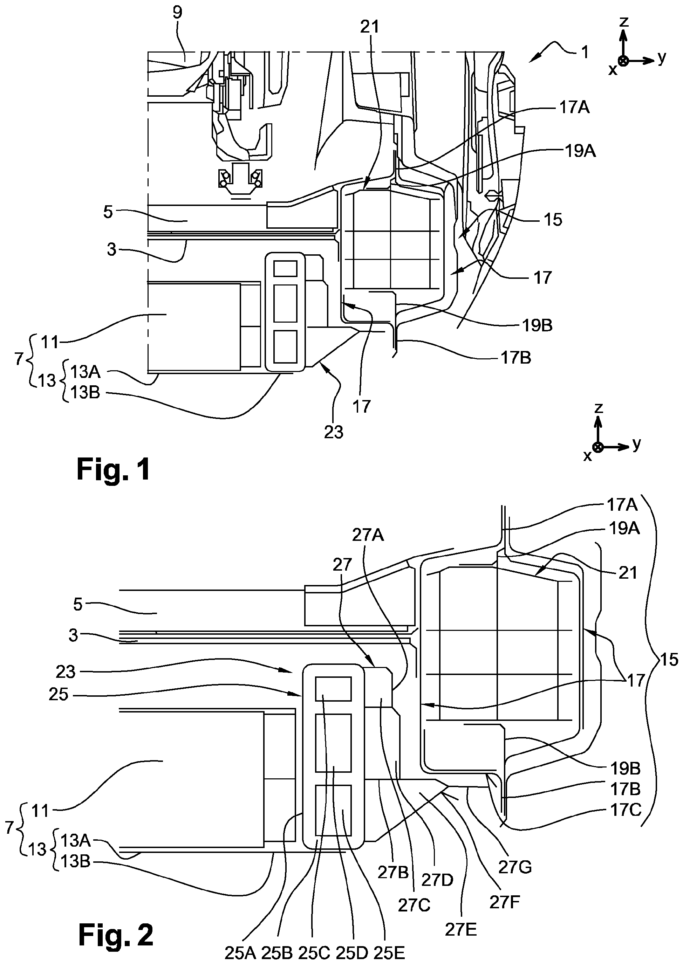

La figure 1 montre une vue en coupe d'un véhicule automobile avec un longeron de batterie selon l'invention. On définit alors en référence au véhicule 1 :
- une direction longitudinale (axe X) correspondant à la direction de déplacement du véhicule 1,
- une direction transversale (axe Y), perpendiculaire à la direction du déplacement du véhicule 1 et horizontale,
- une direction verticale (axe Z) perpendiculaire au plan (XY).

Le véhicule automobile 1 est à propulsion au moins partiellement électrique, comme par exemple un véhicule hybride ou électrique. Il est notamment constitué par un habitacle (non visible sur ces figures), supporté par un plancher 3. Ce plancher 3 supporte également au moins deux traverses d'assise 5 positionnées transversalement à la direction longitudinale du véhicule 1, à l'arrière et à l'avant du véhicule 1. Les traverses d'assise 5 soutiennent respectivement des sièges 9 avant ou éventuellement arrière.

Le véhicule 1 comprend, en outre, une unité de batteries de traction 7, qui est préférentiellement positionnée sous le plancher 3 au niveau de l'une des traverses d'assises 5, à l'avant et/ou à l'arrière du véhicule 1. L'unité de batteries de traction 7 est spécifique au véhicule 1 et ajoute un poids important, comme par exemple d'environ 300 kg, à l'ensemble du véhicule 1. L'unité de batteries 7 comprend une ou des batteries 11 proprement dites, qui sont maintenues contre le plancher 3 par un support de batteries 13. Le support de batteries 13 est préférentiellement constitué par des profilés et comprend notamment une cloison inférieure 13A permettant de supporter la ou les batteries proprement dites 11. Cette cloison inférieure 13A se prolonge latéralement en-dessous d'un longeron de batterie 23 par un prolongement latéral 13B, qui va soutenir verticalement le longeron de batterie 23.

Le véhicule automobile 1 comprend, en outre, deux profilés latéraux de bas de caisse 15. Ces profilés latéraux 15 sont positionnés de part et d'autre du plancher 3, l'unité de batterie 7 étant positionnée entre les deux profilés latéraux 15. Sur cette figure est représenté le profilé latéral 15 droit. Le profilé latéral 15 présente une section transversale formant un corps creux, le profilé 15 étant constitué par deux parties longitudinales 17 ayant chacune une section en forme de U couché. Chaque branche du U de chaque partie 17 est prolongée dans leurs extrémités supérieure et inférieure par des ailes supérieures 17A et inférieures 17B, par lesquelles les parties 17 sont fixées ensemble, par des techniques connues de l'homme du métier. Entre les ailes supérieures 17A et inférieures 17B sont fixés des extensions supérieure 19A et inférieure 19B, qui vont maintenir un cloisonnement 21 interne du profilé latéral 15. Ce cloisonnement 21 peut comprendre des séparations verticales et horizontales, qui s'entrecroisent perpendiculairement les unes aux autres. La présence de ce cloisonnement 21 permet d'améliorer le comportement en déformation du véhicule 1 lors du choc latéral. Entre l'unité de batterie 7 et le profilé latéral de bas de caisse 15 se trouve le longeron de batterie 23 selon l'invention, qui sera décrit de manière plus détaillée à la figure 2.

La figure 2 est un agrandissement de la figure 1, au niveau du longeron de batterie.

Le longeron de batterie 23 est disposé latéralement entre l'unité de batterie 7 et le profilé latéral de bas de caisse 15. Ce longeron de batterie 23 présente une section transversale avec une première portion 25 et une seconde portion 27. La première portion 25 est située du côté de l'unité de batterie 7 alors que la deuxième portion 27 est située du côté du profilé latéral de bas de caisse 15. Ainsi, les première et deuxième portions (25, 27) du longeron de batterie 23 sont adjacentes le long d'un plan vertical suivant l'axe Z, et sont préférentiellement réalisées d'un seul tenant. Chacune des première et deuxième portions (25, 27) comprennent des parois verticales (25A, 27A) et horizontales (25B, 27B), formant des corps creux (25C, 27C ; 25D, 27D ; 25E, 27E). Les parois horizontales (25B, 27B) sont au moins au nombre de trois, plus préférentiellement quatre, et permettent la formation d'un corps creux supérieur (25C, 27C), intermédiaire (25D, 27D) et inférieur (25E, 27E). La première portion 25 présente une section de parallélépipède régulier. Les corps creux (27C, 27D, 27E) de la deuxième portion 27 ont la particularité d'être de sections croissantes du corps creux supérieur 27C au corps creux inférieur 27E. Le corps creux inférieur 27E présente plus particulièrement une paroi inférieure inclinée vers le haut et latéralement vers l'extérieur. Cette paroi inférieure présente une face latéralement extérieure 27F formant un épaulement 27G qui s'étend au niveau ou en dessous d'une face inférieure 17C du profilé latéral 15 correspondant, cet épaulement 27G s'étendant horizontalement le long de la face inférieure 17C du profilé latéral de bas de caisse 15.

Les parois verticales 27A et horizontales 27B de la deuxième portion 27 présentent une épaisseur moyenne inférieure à 70%, préférentiellement 50% d'une épaisseur moyenne des parois (25A, 25B) de la première portion 25. L'épaisseur moyenne des parois (25A, 25B) la première portion 25 est ainsi comprise entre 4,5 et 5,5mm, et l'épaisseur moyenne des parois (27A, 27B) de la deuxième portion 27 est préférentiellement comprise entre 1,5 et 2,5mm. Cette différence d'épaisseur conduit à une raideur en compression transversale variable entre les première et deuxième portions (25, 27). Ainsi, la deuxième portion 27 présente une raideur en compression transversale inférieure à la raideur en compression transversale de la première portion 25. La deuxième portion 27 du longeron de batterie 23 présente une surface de matière travaillant en compression transversale, inférieure à 70%, plus préférentiellement inférieur à 50 %, d'une surface de matière travaillant en compression transversale de la première portion 25. Il est également intéressant de noter que le longeron de batterie 23 présente une hauteur égale à au moins 50% de la hauteur du profilé latéral 15 correspondant. Préférentiellement, le longeron de batterie 23 est réalisé dans des matériaux métalliques, plus préférentiellement en aluminium.

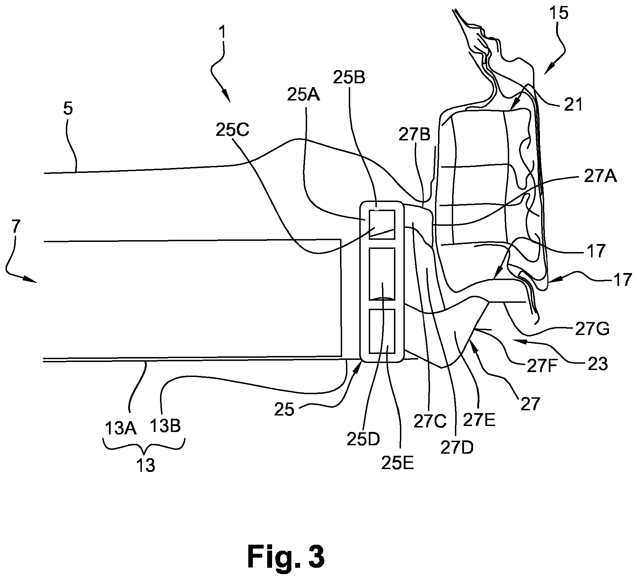

La figure 3 représente une coupe du véhicule montré à la figure 1, après un impact latéral. Lors d'un impact latéral, le profilé latéral de bas de caisse 15 vient prendre appui sur la traverse d'assise (visible à la figure 1) et sur le longeron de batterie 23. L'écrasement latéral du profilé latéral 15 permet la dissipation d'une partie de l'énergie produite au moment du choc. La deuxième portion 27 du longeron de batterie 23 est elle aussi impactée par le choc et est déformée, ce qui va dissiper l'énergie restante produite au moment du choc. La première portion 25 dudit longeron 23 n'est pas altérée par le choc, assurant la protection et l'intégrité de l'unité de batterie 7 vis -à-vis du choc. La dissipation de l'énergie causée par les déformations du profilé 15 et du longeron 23 va permettre d'abaisser la vitesse de décélération au niveau de l'unité de batterie de 90g, valeur obtenue lors des essais avant la mise en place du longeron de batterie 23 selon l'invention, à 70g. Cette valeur est satisfaisante en ce qu'elle correspond à une décélération que la plupart des batteries de traction peuvent supporter sans dommages.

## Revendications

1. Véhicule automobile (1) à propulsion au moins partiellement électrique, comprenant :
- un plancher (3) ;
- deux profilés latéraux de bas de caisse (15), de part et d'autre du plancher (3) ;
- une unité de batteries de traction (7) sous le plancher (3) et entre les deux profilés (15) ;
- au moins un longeron de batterie (23) disposé latéralement entre l'unité de batteries de traction (7) et au moins un des deux profilés latéraux de bas de caisse (15), respectivement ;
**caractérisé en ce que** :
l'au moins un longeron de batterie (23) présente une section transversale avec une première portion (25) située du côté de l'unité de batteries de traction (7) et une deuxième portion (27) située du côté du profilé latéral de bas de caisse (15) correspondant, ladite deuxième portion (27) présentant une raideur en compression transversale inférieure à une raideur en compression transversale de la première portion (25), de manière à ce que la deuxième portion (27) se déforme de manière préférentielle par rapport à la première portion (25) lors d'un choc latéral sur le véhicule (1) du côté dudit longeron (23).

2. Véhicule automobile (1) selon la revendication 1, **caractérisé en ce que** la deuxième portion (27) de la section transversale de l'au moins un longeron de batterie (23) présente, par unité de longueur, une surface de matière travaillant en compression transversale, qui est inférieure à 70% d'une surface de matière travaillant en compression transversale de la première portion (25) de ladite section.

3. Véhicule automobile (1) selon l'une des revendications 1 et 2, **caractérisé en ce que** les première et deuxième portions (25, 27) de la section transversale de l'au moins un longeron de batterie (23) sont adjacentes le long d'un plan vertical.

4. Véhicule automobile (1) selon l'une des revendications 1 à 3, **caractérisé en ce que** les première et deuxième portions (25, 27) de la section transversale de l'au moins un longeron de batterie (23) sont d'un seul tenant.

5. Véhicule automobile (1) selon l'une des revendications 1 à 4, **caractérisé en ce que** les première et deuxième portions (25, 27) de la section transversale de l'au moins un longeron de batterie (23) comprennent des parois (25A, 27A ; 25B, 27B) formant des corps creux (25C, 27C ; 25D, 27D ; 25E, 27E), les parois (27A, 27B) de ladite deuxième portion (27) présentant une épaisseur moyenne inférieure à 70% d'une épaisseur moyenne des parois (25A, 25B) de ladite première portion (25).

6. Véhicule automobile (1) selon l'une des revendications 1 à 5, **caractérisé en ce que** chacune des première et deuxième portions (25, 27) de la section transversale de l'au moins un longeron de batterie (23) comprend au moins trois parois horizontales (25B, 27B).

7. Véhicule automobile (1) selon l'une des revendications 1 à 6, **caractérisé en ce que** chacun des deux profilés latéraux de bas de caisse (15) présente une section transversale formant un corps creux, l'au moins un longeron de batterie (23) s'étendant verticalement sur au moins 50% de la hauteur dudit longeron (23) le long du corps creux du profilé latéral (15) correspondant.

8. Véhicule automobile (1) selon la revendication 7, **caractérisé en ce que** la deuxième portion (27) de la section transversale de l'au moins un longeron de batterie (23) forme, sur une face latéralement extérieure (27F) de ladite portion (27), un épaulement (27G) au niveau ou en-dessous d'une face inférieure (17C) du corps creux du profilé latéral (15) correspondant.

9. Véhicule automobile (1) selon la revendication 8, **caractérisé en ce que** l'épaulement (27G) sur la face latéralement extérieure (27F) de la deuxième portion (27) de la section transversale de l'au moins un longeron de batterie (23) s'étend horizontalement le long de la face inférieure (17C) du corps creux du profilé latéral (15) correspondant.

10. Véhicule automobile (1) selon l'une des revendications 8 ou 9, **caractérisé en ce que** l'épaulement (27G) sur la face latéralement extérieure (27F) de ladite deuxième portion (27) de la section transversale de l'au moins un longeron de batterie (23) est formé par un corps creux inférieur (27E) de ladite portion (27), ledit corps (27E) présentant une paroi inférieure inclinée vers le haut et latéralement vers l'extérieur.

## Patentansprüche

1. Kraftfahrzeug (1) mit zumindest teilweise elektrischem Antrieb, bestehend aus:
- einem Boden (3);
- zwei seitliche Bodenkörperabschnitte (15) auf beiden Seiten des Bodens (3);
- eine Antriebsbatterieeinheit (7) unter dem Boden (3) und zwischen den beiden Abschnitten (15);
- mindestens einen seitlich zwischen der Antriebsbatterieeinheit (7) und mindestens einem der beiden unteren Karosserieseitenabschnitte (15) angeordneten Batterieholm (23);
**dadurch gekennzeichnet, dass**:
der mindestens eine Batterieholm (23) weist einen Querschnitt mit einem ersten Abschnitt (25) auf der Seite der Antriebsbatterieeinheit (7) und einem zweiten Abschnitt (27) auf der Seite des entsprechenden seitlichen Bodenabschnitts (15) auf, wobei der zweite Abschnitt (27) eine Querdrucksteifigkeit aufweist, die geringer ist als eine Querdrucksteifigkeit des ersten Abschnitts (25), sodass der zweite Abschnitt (27) vorzugsweise bei einem seitlichen Aufprall auf das Fahrzeug (1) auf der Seite des Holms (23) gegenüber dem ersten Abschnitt (25) verformt wird.

2. Kraftfahrzeug (1) nach Anspruch 1, **dadurch gekennzeichnet, dass** der zweite Abschnitt (27) des Querschnitts des mindestens einen Batterieholms (23) pro Längeneinheit eine Materialoberfläche aufweist, die in Querkompression arbeitet, die weniger als 70 % einer Materialoberfläche ist, die in Querkompression des ersten Abschnitts (25) dieses Abschnitts arbeitet.

3. Kraftfahrzeug (1) nach einem der Ansprüche 1 und 2, **dadurch gekennzeichnet, dass** der erste und der zweite Abschnitt (25, 27) des Querschnitts des mindestens einen Batterieholms (23) entlang einer vertikalen Ebene benachbart sind.

4. Kraftfahrzeug (1) nach einem der Ansprüche 1 bis 3, **dadurch gekennzeichnet, dass** der erste und der zweite Abschnitt (25, 27) des Querschnitts des mindestens einen Batterieholms (23) einstückig sind.

5. Kraftfahrzeug (1) nach einem der Ansprüche 1 bis 4, **dadurch gekennzeichnet, dass** der erste und der zweite Abschnitt (25, 27) des Querschnitts des mindestens einen Batterieholms (23) Wände (25A, 27A; 25B, 27B) aufweisen, die Hohlkörper (25C, 27C; 25D, 27D; 25E, 27E) bilden, wobei die Wände (27A, 27B) des zweiten Abschnitts (27) eine durchschnittliche Dicke von weniger als 70 % einer durchschnittlichen Dicke der Wände (25) aufweisen A, 25 B) des ersten Abschnitts (25).

6. Kraftfahrzeug (1) nach einem der Ansprüche 1 bis 5, **dadurch gekennzeichnet, dass** jeder der ersten und zweiten Abschnitte (25, 27) des Querschnitts des mindestens einen Batterieholms (23) mindestens drei horizontale Wände (25B, 27B) aufweist.

7. Kraftfahrzeug (1) nach einem der Ansprüche 1 bis 6, **dadurch gekennzeichnet, dass** jeder der beiden seitlichen Unterkörperabschnitte (15) einen Querschnitt aufweist, der einen Hohlkörper bildet, wobei sich der mindestens eine Batterieholm (23) vertikal über mindestens 50 % der Höhe des Holms (23) entlang des Hohlkörpers des entsprechenden Seitenabschnitts (15) erstreckt.

8. Kraftfahrzeug (1) nach Anspruch 7, **dadurch gekennzeichnet, dass** der zweite Abschnitt (27) des Querschnitts des mindestens einen Batterieholms (23) an einer seitlichen Außenfläche (27F) des Abschnitts (27) eine Schulter (27G) an oder unter einer unteren Fläche (17C) des Hohlkörpers des entsprechenden seitlichen Abschnitts (15) bildet.

9. Kraftfahrzeug (1) nach Anspruch 8, **dadurch gekennzeichnet, dass** sich der Absatz (27G) an der seitlichen Außenfläche (27F) des zweiten Abschnittes (27) des Querschnitts des mindestens einen Batterieholms (23) horizontal entlang der unteren Fläche (17C) des Hohlkörpers des entsprechenden seitlichen Abschnittes (15) erstreckt.

10. Kraftfahrzeug (1) nach einem der Ansprüche 8 oder 9, **dadurch gekennzeichnet, dass** die Schulter (27G) an der seitlichen Außenfläche (27F) des zweiten Abschnitts (27) des Querschnitts des mindestens einen Batterieholms (23) durch einen unteren Hohlkörper (27E) des Abschnitts (27) gebildet ist, wobei der Körper (27E) eine untere Wand aufweist, die nach oben und seitlich nach außen geneigt ist.

## Claims

1. Motor vehicle (1) with at least partially electric propulsion, comprising:
- a floor (3);
- two lateral bottom body sections (15) on either side of the floor (3);
- a traction battery unit (7) under the floor (3) and between the two sections (15);
- at least one battery spar (23) arranged laterally between the traction battery unit (7) and at least one of the two lower body side sections (15), respectively;
**characterized in that**:
the at least one battery spar (23) has a cross-section with a first portion (25) located on the side of the traction battery unit (7) and a second portion (27) located on the side of the corresponding lateral bottom section (15), said second portion (27) having a transverse compression stiffness less than a transverse compression stiffness of the first portion (25), so that the second portion (27) is preferably deformed with respect to the first portion (25) during a lateral impact on the vehicle (1) on the side of said spar (23).

2. Motor vehicle (1) according to claim 1, **characterized in that** the second portion (27) of the cross-section of the at least one battery spar (23) has, per unit length, a surface area of material working in transverse compression, which is less than 70% of a surface area of material working in transverse compression of the first portion (25) of said section.

3. Motor vehicle (1) according to one of claims 1 and 2, **characterized in that** the first and second portions (25, 27) of the cross-section of the at least one battery spar (23) are adjacent along a vertical plane.

4. Motor vehicle (1) according to one of claims 1 to 3, **characterized in that** the first and second portions (25, 27) of the cross-section of the at least one battery spar (23) are in one piece.

5. Motor vehicle (1) according to one of claims 1 to 4, **characterized in that** the first and second portions (25, 27) of the cross-section of the at least one battery spar (23) comprise walls (25A, 27A; 25B, 27B) forming hollow bodies (25C, 27C; 25D, 27D; 25E, 27E), the walls (27A, 27B) of the said second portion (27) having an average thickness of less than 70% of an average thickness walls (25 A, 25 B) of said first portion (25).

6. Motor vehicle (1) according to one of claims 1 to 5, **characterized in that** each of the first and second portions (25, 27) of the cross-section of the at least one battery spar (23) comprises at least three horizontal walls (25B, 27B).

7. Motor vehicle (1) according to one of claims 1 to 6, **characterized in that** each of the two lateral lower-body sections (15) has a cross-section forming a hollow body, the at least one battery spar (23) extending vertically over at least 50% of the height of the said spar (23) along the hollow body of the corresponding lateral section (15).

8. Motor vehicle (1) according to claim 7, **characterized in that** the second portion (27) of the cross section of the at least one battery spar (23) forms, on a laterally outer face (27F) of said portion (27), a shoulder (27G) at or below a lower face (17C) of the hollow body of the corresponding lateral section (15).

9. Motor vehicle (1) according to claim 8, **characterized in that** the shoulder (27G) on the laterally outer face (27F) of the second portion (27) of the cross section of the at least one battery spar (23) extends horizontally along the lower face (17C) of the hollow body of the corresponding lateral section (15).

10. Motor vehicle (1) according to either of claims 8 and 9, **characterized in that** the shoulder (27G) on the laterally outer face (27F) of the said second portion (27) of the cross-section of the at least one battery spar (23) is formed by a lower hollow body (27E) of the said portion (27), the said body (27E) having a lower wall inclined upwards and laterally outwards.
